# EUROPÄISCHE PATENTSCHRIFT

(11) **EP 1 974 895 B1**
(45) Veröffentlichungstag und Bekanntmachung des Hinweises auf die Patenterteilung: **01.02.2012**
(21) Anmeldenummer: 08004125.4
(22) Anmeldetag: 06.03.2008
(51) Int. Cl.: B30B 11/08, B30B 15/32, B65G 11/20, B65G 47/71

(54) **Vorrichtung für den Ablauf von Presslingen aus einer Rundläuferpresse**
Device for discharging mouldings from a rotary press
Dispositif de déchargement de pièces moulées provenant d'une presse rotative

(30) Priorität: 31.03.2007 DE 102007015672
(43) Veröffentlichungstag der Anmeldung: 01.10.2008
(73) Patentinhaber: Fette GmbH, 21493 Schwarzenbek (DE)
(72) Erfinder: Kolbe, Sven, 21514 Büchen (DE); Arndt, Ulrich, 21481 Lauenburg (DE)
(74) Vertreter: Hauck Patent- und Rechtsanwälte

(56) Entgegenhaltungen:
- GB-A- 250 957
- GB-A- 576 898
- JP-U- 58 107 294
- US-A- 2 642 974
- US-A- 4 870 335
- DATABASE WPI Section Ch, Week 198240 Thomson Scientific, London, GB; Class B07, AN 1982-85416E XP002629928, -& SU 887 263 A1 (ZHDANOVSKIJ SP PK B MED PROMY [SU]) 7. Dezember 1981 (1981-12-07)
- LAYBOURN ET AL: "Small Card Stacker", IP.COM JOURNAL, IP.COM INC., WEST HENRIETTA, NY, US, 1. Februar 1969 (1969-02-01), XP013078932, ISSN: 1533-0001

## Beschreibung

Die Erfindung bezieht sich auf eine Vorrichtung für den Ablauf von Preßlingen aus einer Rundläuferpresse nach dem Patentanspruch 1. Dokument SU 887 263 offenbart eine Vorrichtung der oben genannten Art.

In einer Rundläuferpresse werden zum Beispiel Tabletten oder andere Preßlinge hergestellt. Nach dem Abstreifen der Preßlinge von der Oberseite einer Matrizenscheibe werden diese einem Ablauf zugeführt. Hinter bzw. unter dem Ablauf ist ein Gefäß zur Aufnahme der Preßlinge angeordnet. Es ist bekannt, zwei oder mehr parallele Kanal- oder Rinnenabschnitte vorzusehen, in die wahlweise die Preßlinge einlaufen, um in einem Behälter aufgefangen zu werden. Die Richtungswahl erfolgt mit Hilfe einer Weiche, die von einem Antriebsmotor angetrieben ist. Der Antriebsmotor wird seinerseits abhängig von bestimmten Preßzuständen der Rundläuferpresse vom Steuerrechner der Rundläuferpresse angesteuert. Die Weiche ist über eine Welle mit dem Antrieb unterhalb des Ablaufs kraftschlüssig verbunden, wobei die Welle durch eine Öffnung in den Ablaufkanal hindurchsteht.

Der Erfindung liegt die Aufgabe zugrunde, eine Vorrichtung für den Ablauf von Preßlingen aus einer Rundläuferpresse zu schaffen, welche neben einer einfachen Montage bzw. Demontage eine vollständige Trennung von Weiche und Antrieb vorsieht.

Diese Aufgabe wird durch die Merkmale des Patentanspruchs 1 gelöst.

Bei der erfindungsgemäßen Vorrichtung ist die Weiche mittels eines Schwenkzapfens schwenkbar gelagert, der drehfest mit einem Kanalabschnitt verbunden ist. Der Schwenkantrieb unterhalb oder oberhalb einer der Kanalabschnitte ist über eine magnetische Kopplung exzentrisch vom Schwenkzapfen mit der Weiche gekoppelt.

Bei der erfindungsgemäßen Vorrichtung entfällt eine Öffnung durch einen Kanalboden oder eine -decke, sodaß eine vollständige Entkopplung zwischen dem Produktbereich und dem Antrieb erzielt wird. Dadurch läßt sich auch der Ablauf besser reinigen. Auch die Demontage wird bei einer erfindungsgemäßen Vorrichtung erleichtert.

Nach einer Ausgestaltung der Erfindung ist der Schwenkantrieb ein Drehantrieb, dessen Drehachse mit der Schwenkachse der Weiche zusammenfällt. An einer Antriebswelle des Drehantriebs ist ein Arm oder ein Segment angebracht, der bzw. das mindestens einen Magneten oder mindestens ein magnetisch wirkendes Materialstück hält, und an einer Weiche ist mindestens ein Magnet oder mindestens ein magnetisch wirkendes Materialstück angebracht, vorzugsweise im gleichen Abstand von der Schwenkachse wie der Magnet an dem Arm oder Segment des Schwenkantriebs. Wird der Antriebsmotor um einen bestimmten Winkel in Drehung versetzt, folgt die Weiche über die magnetische Kopplung nach. Es spielt dabei keine Rolle, daß der Antriebsmotor keinen präzisen Drehwinkel ausführen muß, da die Endstellungen der Weiche durch einen entsprechenden Anschlag bzw. eine Wand des betreffenden Kanalabschnitts vorgegeben sein kann. Es ist jedoch vorteilhaft, wenn in den beiden Endstellungen, welche die Weiche einnehmen kann, annähernd eine Ausrichtung der magnetischen bzw. magnetisch wirkenden Materialstücke vorliegt, um eine gute magnetische Kopplung zu gewährleisten. Der Boden bzw. die Decke des betreffenden Kanalabschnitts ist vorzugsweise unmagnetisch, um die Wirksamkeit der magnetischen Kopplung nicht zu beeinträchtigen.

Der mindestens eine an der Weiche angebrachte Magnet oder das mindestens eine magnetisch wirkende Stück ist vorzugsweise in der Seite der Weiche eingelassen, welche dem Boden oder die Decke bzw. dem Magneten auf der Unterseite oder Oberseite des Kanalabschnitts zugeordnet ist. Dadurch ist die von den Magnetfeldlinien zu überbrückende Strecke im Wesentlichen durch die Dicke des Bodens oder der Decke des betreffenden Kanalabschnitts begrenzt.

Die Erfindung wird nachfolgend anhand von Zeichnungen näher erläutert.
- Fig. 1: zeigt schematisch den Tablettenablauf bei einer Rundläuferpresse,
- Fig. 2: zeigt zwei parallele Kanalabschnitte mit einer Weiche in einer ersten Position,
- Fig. 3: zeigt die Darstellung nach Figur 2 mit der Weiche in einer zweiten Position,
- Fig. 4: zeigt schematisch eine Weiche bzw. einen Antrieb dafür nach der Erfindung.

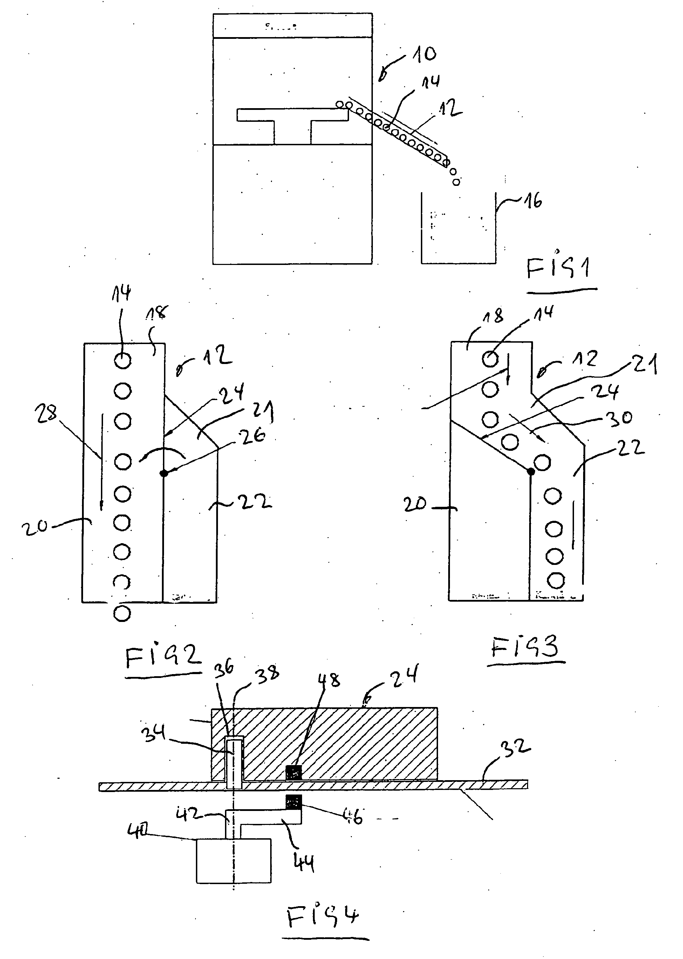

In Figur 1 ist ganz schematisch eine Rundläuferpresse 10 angeordnet, in der zum Beispiel Tabletten hergestellt werden. Bei 12 ist eine Kanalanordnung dargestellt, über welche Tabletten 14 nacheinander entlang rutschen in einen Behälter 16 unterhalb der Kanalanordnung 12. Die Kanalanordnung ist in den Figuren 1 und 2 ebenfalls schematisch dargestellt. Sie weist einen ersten Kanalabschnitt 18 auf, der sich unmittelbar an die Abstreifvorrichtung in der Rundläuferpresse 10 anschließt (nicht gezeigt). Ein zweiter Kanalabschnitt 20 schließt sich linear an den ersten Kanalabschnitt 18 an. Ein dritter Kanalabschnitt 22 läuft parallel zum zweiten Kanalabschnitt 20 und ist über einen schrägen Übergangsabschnitt 21 mit dem ersten Kanalabschnitt 18 verbunden. Zwischen dem zweiten und dritten Kanalabschnitt 20, 22 ist eine Weiche 24 angeordnet, welche um einen Drehpunkt 26 schwenkbar ist. In der in Figur 2 dargestellten Position der Weiche 24 rutschen die Tabletten 14 vom ersten in den zweiten Kanalabschnitt. Dies ist durch Pfeil 28 angedeutet. In Figur 3 ist die Weiche 24 in der zweiten Endstellung, in der der zweite Kanalabschnitt 20 abgesperrt ist und die Tabletten 14 von der Weiche 24 in den dritten Kanalabschnitt 22 umgelenkt werden, wie durch Pfeil 30 gezeigt.

In Figur 4 ist der Antrieb für die Weiche 24 schematisch dargestellt. Am Boden der Kanalanordnung 32, der sich unterhalb der Weiche 24 erstreckt, ist ein Drehzapfen 34 drehfest angebracht. Er ragt in eine Lagerausnehmung 36 des Weichenkörpers hinein, sodaß die Weiche 24 um eine Achse 38 schwenkbar gelagert ist. Für die Lagerung kann ein Wälzlager vorgesehen werden. Außerdem kann die Lagerung so ausgeführt sein, daß zwischen der Unterseite des Weichenkörpers und der Oberseite des Bodens 32 ein geringer Spalt entsteht und so für die Verschwenkung der Weiche 24 nur wenig Kraft aufgebracht werden muß.

Unterhalb des Bodens 32 ist ein Drehantrieb 40 angeordnet, mit einer Antriebswelle 42. Die Achse der Antriebswelle 42 fällt mit der Schwenkachse 38 zusammen. Am Ende der Antriebswelle 42 ist ein Arm 44 angebracht, der sich im rechten Winkel von der Antriebswelle 42 fort erstreckt. Der Arm 44 verläuft mithin parallel und im Abstand zum Boden 32. Am Arm 44 ist ein Permanentmagnet 46 angebracht. In die Unterseite des Weichenkörpers ist ein weiterer Permanentmagnet 48 eingelassen, wobei er nicht über die Unterseite des Weichenkörpers 24 übersteht. Der Abstand des Permanentmagneten 48 von der Schwenkachse 38 entspricht dem Abstand des Permanentmagneten 46 von der gleichen Achse. Wird mithin der Schwenkantrieb aktiviert, schwenkt der Arm 44 den Permanentmagneten 46 und nimmt dadurch den anderen Permanentmagneten 48 mit und damit auch die Weiche 24.

Es versteht sich, daß nur eines der beiden Stücke 46, 48 Permanentmagneteigenschaften aufweisen muß, während das andere Stück ferromagnetisch sein kann. Es versteht sich auch, daß zum Beispiel der Permanentmagnet 46 durch einen Elektromagneten ersetzt werden kann.

Der Drehantrieb 40 wird vom nicht gezeigten Prozeßrechner für die Rundlaufpresse 20 gesteuert. Es ist nicht erforderlich, daß hierbei ein exakter Drehwinkel für den Drehantrieb 40 vorgegeben ist, da die Schwenkbegrenzung durch die entsprechenden Wände der Kanalabschnitte vorgegeben ist.

## Patentansprüche

1. Vorrichtung für den Ablauf von Preßlingen (14) aus einer Rundläuferpresse (10), mit einem sich unmittelbar an die Rundläuferpresse (14) anschließenden ersten Kanalabschnitt (18), an den sich mindestens zwei Kanalabschnitte (20, 22) anschließen, denen eine Weiche (24) zugeordnet ist, die um eine Achse annähernd senkrecht zur Längserstreckung des ersten und/oder zweiten Kanalabschnitts (20, 22) schwenkbar gelagert ist und wahlweise den ersten Kanalabschnitt (18) mit einem der weiteren Kanalabschnitte (20, 22) verbindet und einem Schwenkantrieb (40) für die Weiche (24) unterhalb oder oberhalb der Kanalabschnitte (18), **dadurch gekennzeichnet, daß** ein Lagerzapfen (34) für die Weiche (24) drehfest mit einem Kanalabschnitt verbunden ist und der Schwenkantrieb (40) über eine magnetische Kopplung exzentrisch zum Lagerzapfen (34) mit der Weiche (24) gekoppelt ist.

2. Vorrichtung nach Anspruch 1, **dadurch gekennzeichnet, daß** der Schwenkantrieb (40) ein Drehantrieb ist, dessen Drehachse mit der Schwenkachse (38) der Weiche (24) zusammenfällt, an einer Antriebswelle (42) des Drehantriebs ein Arm (44) oderein Segment oder dergleichen angebracht ist, der bzw. das mindestens einen Permanentmagneten oder mindestens ein magnetisch wirkendes Materialstück hält und an der Weiche (24) mindestens einen Permanentmagnet oder mindestens ein magnetisch wirkendes Materialstück angebracht ist, etwa in gleichem Abstand von der Schwenkachse (38) wie der Permanentmagnet oder das magnetisch wirkende Materialstück am Arm (44).

3. Vorrichtung nach Anspruch 1 oder 2, **dadurch gekennzeichnet, daß** für die Weiche und den Schwenkantrieb jeweils ein Permanentmagnet (46, 48) vorgesehen ist.

4. Vorrichtung nach einem der Ansprüche 1 bis 3, **dadurch gekennzeichnet, daß** der am Arm (44) oder das Segment des Schwenkantriebs (40) angebrachte Magnet ein Elektromagnet ist.

5. Vorrichtung nach einem der Ansprüche 1 bis 4, **dadurch gekennzeichnet, daß** das permanentmagnetische oder magnetisch wirkende Materialstück in der Seite der Weiche (24) eingelassen ist, die dem Boden bzw. der Decke des zugeordneten Kanalabschnitts zugekehrt ist.

## Claims

1. Apparatus for the outflow of compacts (14) from a rotary press (10), with a first channel section (18) connecting directly to the rotary press (10), to which at least two channel sections (20, 22) are connected, to which a deflector (24) is attached, which is swivel mounted at an axis almost vertical to the longitudinal extension of the first and/or second channel section (20, 22) and optionally connects the first channel section (18) with one of the other channel sections (20, 22) and a swivel drive (40) for the deflector (24) below or above the channel sections (18), **characterized in that** a bearing pin (34) for the deflector (24) is connected in a torquc-proof manner with a channel section and the swivel drive (40) is coupled with the deflector (24) via a magnetic coupling eccentric to the bearing pin (34).

2. Apparatus according to claim 1, **characterized in that** the swivel drive (40) is a rotary drive, the axis of rotation of which coincides with the swivel axis (38) of the deflector, an arm (44) or a segment or suchlike is attached to a drive shaft (42) of the rotary drive, which holds at least one permanent magnet or at least one magnetically functioning material piece and at least one permanent magnet or at least one magnetically functioning material piece is attached to the deflector (24), approximately at the same distance from the swivel axis (38) as the permanent magnet or the magnetically functioning material piece on the arm (44).

3. Apparatus according to claim 1 or 2, **characterized in that** a permanent magnet (46, 48) is provided for both the deflector and the swivel drive.

4. Apparatus according to one of claims 1 through 3, **characterized in that** the magnet attached to the arm (44) or the segment of the swivel drive (40) is an electromagnet.

5. Apparatus according to one of claims 1 through 4, **characterized in that** the permanent magnetic or magnetically functioning material piece is embedded in the side of the deflector (24), which is turned towards the floor or the ceiling of the attached channel section.

## Revendications

1. Dispositif de déchargement de pièces moulées (14) provenant d'une presse rotative (10), avec une première section de conduit (18) qui se rattache immédiatement à la presse rotative (10) et auquel se rattachent au moins deux sections de conduit (20, 22) auxquels est associé une aiguille (24) qui est montée de façon pivotante autour d'un axe à peu près vertical par rapport à l'extension longitudinale de la première et/ou deuxième section de conduit (20, 22) et qui relie de façon sélective la première section de conduit (18) avec une des autres sections de conduit (20, 22), et avec un entraînement de pivotement (40) pour l'aiguille (24) au-dessous ou au-dessus des sections de conduit (18), **caractérisé en ce que** un tourillon (34) pour l'aiguille (24) est relié de façon bloquée contre la rotation à une section de conduit, et que l'entraînement de pivotement (40) est accouplé à l'aiguille (24) par un accouplement magnétique de façon excentrique au tourillon (34).

2. Dispositif selon la revendication 1, **caractérisé en ce que** l'entraînement de pivotement (40) est un entraînement rotatif dont l'axe de rotation est coïncident avec l'axe de pivotement (38) de l'aiguille (24), que dans un arbre d'entraînement (42) de l'entraînement rotatif est monté un bras (44) ou un segment ou chose pareille qui tient au moins un aimant permanent ou au moins une pièce de matériau magnétiquement actif, et que dans l'aiguille (24) est monté au moins un aimant permanent ou au moins une pièce de matériau magnétiquement actif, à peu près dans la même distance de l'axe de pivotement (38) comme l'aimant permanent ou la pièce de matériau magnétiquement actif sur le bras (44).

3. Dispositif selon la revendication 1 ou 2, **caractérisé en ce que** un aimant permanent (46, 48) est pourvu à chaque fois pour l'aiguille et l'entraînement de pivotement.

4. Dispositif selon l'une quelconque des revendications 1 à 3, **caractérisé en ce que** l'aimant monté sur le bras (44) ou sur le segment de l'entraînement de pivotement (40) est un aimant électrique.

5. Dispositif selon l'une quelconque des revendications 1 à 4, **caractérisé en ce que** la pièce de matériau permanent-magnétique ou magnétiquement actif est encastrée dans ce côté de l'aiguille (24) qui est vis-à-vis au fond ou au plafond de la section de conduit associée.
